# EUROPÄISCHE PATENTANMELDUNG

(11) **EP 1 972 398 A1**
(43) Veröffentlichungstag der Anmeldung: **24.09.2008**
(21) Anmeldenummer: 07005754.2
(22) Anmeldetag: 21.03.2007
(51) Int. Cl.: B23B 51/02

(54) **Spiralbohrer**

(71) Anmelder: En Nastroje, s.r.o., 69701 Kyjov (CZ)
(72) Erfinder: Necesanek, Emil, 59301 Bystrice nad Pernstejnem (CZ)
(74) Vertreter: Markes, Libor

(57) **Zusammenfassung**

Der geschliffene spiralförmige Metallbohrer hat einen Schaft (1) und einen Arbeitsbereich (2), der zwei Spiralnuten (3) mit Führungsfasen (4) und einen Kern (5) aufweist, der sich in der Längsrichtung vom Schaft zur Stirn (6) verjüngt, an der sich zwei Hauptschneiden (7) und eine Querschneide (8) befinden. Der Kern (5) verjüngt sich nur bis zu einem Abstand (a) von der Bohrerspitze, in diesem Abstand (a) weist er einen Durchmesser (d₁) auf, dessen Größe die Größe eines Kerndurchmessers (d₂) in der Spitze nicht überschreitet. Dabei beträgt der Kerndurchmesser (d₂) in der Spitze 3 bis 15 % eines Durchmessers (D) des Arbeitsbereichs (2), und der Querschneidenwinkel (γ) liegt im Bereich von 100 bis 110°_

## Beschreibung

Die Erfindung bezieht sich auf einen geschliffenen spiralförmigen Metallbohrer, der einen Schaft und einen Arbeitsbereich hat, der zwei Spiralnuten mit Führungsfasen und einen Kern aufweist, der sich in Längsrichtung vom Schaft zur Stirn verjüngt, an der sich zwei Hauptschneiden und eine Querschneide befinden.

### Bisheriger Stand der Technik

Übliche Spiralbohrer werden mit einem Kern hergestellt, dessen Durchmesser 20 bis 25 % des Bohrerdurchmessers beträgt. Solche Bohrer benötigen eine ziemlich große Vorschubskraft, insbesondere zu Beginn des Bohrens. Deswegen werden die Bohrer ausgespitzt, wodurch der Kerndurchmesser im Anspitzabschnitt reduziert und die Querschneide des Bohrers gekürzt wird. Bohrer mit einem schlanken Kern im ganzen Arbeitsbereich sind nicht torsionsfest und federn, was die Zylindrizität der Bohrungen beeinträchtigt und zum Brechen der Bohrer führt. Deswegen werden Bohrer mit einem sich kontinuierlich oder stufenweise vom Schaft zur Spitze verjüngenden Kern hergestellt. So ein Bohrer wird z.B. in der Patentanmeldung DE 19807609 beschrieben. Nachteilig an diesen Bohrern ist, dass der Kerndurchmesser im Anspitzabschnitt nach jedem Nachschleifen zunimmt, sodass es sowieso notwendig ist, den Bohrer auszuspitzen. Durch das Gebrauchsmuster DE 29620308 ist ein Mikrobohrer mit einem sich konisch verjügenden Kern bekannt, der vor der Spitze in einen zylinderförmigen Abschnitt übergeht. Bei der Herstellung solcher Bohrer ist es schwierig, einen konstanten Kerndurchmesser des Zylinderabschnitts einzuhalten.

Bei den üblichen Bohrern wird die Stirn des Bohrers so geschliffen, dass der Querschneidenwinkel, d.h. der Winkel zwischen Haupt- und Querschneide, 120 bis 135° beträgt. Wenn sich dieser Winkel der oberen Grenze nähert, nimmt der Bohrer einen größeren Span ab, als er abführen kann, was zum sog. Abspringen des Bohrers führt. Der Bohrer arbeitet unruhig und die Zylindrizität der Bohrungen wird beeinträchtigt. Wenn sich dagegen der Querschneidenwinkel der untemen Grenze nähert, ist die Bohrung von ziemlich großer Güte, jedoch benötigt der Bohrer eine übermäßige Vorschubskraft. Mit dem sich verjüngenden Kerdurchmesser im Anspitzabschnitt sollte die Vorschubskraft logisch auch bei einem extrem kleinen Querschneidenwinkel sinken. Trotzdem benutzt man auch bei ausgespitzten Bohrern und bei Bohrern mit kegeligem Kern einen Querschneidenwinkel im Bereich von 120 bis 135°. Der Grund dafür liegt darin, dass bei dem konischen Kern in dem Anspitzabschnitt und bei einem kleinen Querschneidenwinkel die notwendige Anpresskraft zu groß ist, ob bei einem ausgespitzten Bohrer oder einem kegeligen Kern. Die Fläche der Spiralnut für die Abfuhr der Späne ist in diesen Fällen nicht optimal. Es gibt auch einen technologischen Grund: Beim Nachschleifen eines solchen Bohrers muss man außer dem Schleifen der Stirn auch die Spiralnuten ausspitzen, was häufig von dem Benutzer selbst nicht durchgeführt werden kann.

Der Efindung liegt die Aufgabe zugrunde, einen geschliffenen Spiralbohrer zu entwerfen, der Bohrungen von großer Güte effizient und mit minimaler Vorschubskraft sowie einfaches Nachschleifen des Bohrers ermöglicht.

### Darstellung der Erfindung

Erfindungsgemäß wird die Aufgabe durch einen geschliffenen spiralförmigen Metallbohrer gelöst, der einen Schaft und einen Arbeitsbereich hat, der zwei Spiralnuten mit Führungsfasen und einen Kern aufweist, der sich in der Längsrichtung vom Schaft zur Stirn verjüngt, an der sich zwei Hauptschneiden und eine Querschneide befinden. Der Kern verjüngt sich nur bis zu einem gewissen Abstand von der Bohrerspitze, wobei er in diesem Abstand einen Durchmesser aufweist, dessen Größe die Größe des Kerndurchmessers in der Spitze nicht überschreitet. Dabei beträgt der Kerndurchmesser in der Spitze 3 bis 15 % des Durchmessers des Arbeitsbereichs und der Querschneidenwinkel liegt im Bereich von 100 bis 110°. Bei dieser Kombination der geometrischen Merkmale dringt der Bohrer infolge des subtilen Kerns und der kurzen Querschneide mit Leichtigkeit in das Material trotzt dem extrem kleinen Querschneidenwinkel. Der kleine Querschneidenwinkel sichert dem Bohrer einen ruhigen Gang und dadurch exakte

Bohrungen.

Bei einer vorteilhaften Ausführung des erfindungsgemäßen Bohrers, die eine noch bessere Späneabfuhr aus dem Schnitt ermöglicht, verbreitet sich der Kern kegelig vom Ende der Verjüngung bis zur Spitze, wobei der Kerndurchmesser in der Spitze um 3 bis 20 % größer ist als der kleinste Kerndurchmesser. Es zeigt sich, dass bei dem sich in Richtung Spitze verbreitenden Kern die Kernabmessungen in der Produktion leichter eingehalten werden können, was normalerweise bei einem zylindrischen Kern im Spitzbereich problematisch ist.

Um eine ausreichende Torsionsfestigkeit einzuhalten, überschreitet die Länge des Kernabschnitts vom Ende der Kernverjüngung bis zu der Spitze nicht das Vierfache des Durchmessers des Arbeitsbereichs.

Der Kern kann von dem Schaft bis zum Ende der Verjüngung in mehrere Abschnitte unterteilt sein, die abgestufte Konizität aufweisen.

Zwecks einer besseren Führung des Bohrers bei Bohrungen am Rande eines Werkstücks oder einer benachbarten Bohrung kann der Bohrer an jeder Spiralnut mit je zwei Führungsfasen versehen werden.

### Kurze Beschreibung der Ausbildungen

Die Erfindung wird nachstehend anhand von Ausführungsbeispielen näher erläutert. In den Zeichnungen zeigen:
Fig. 1 eine Seitenansicht einer ersten Ausführung des Spiralbohrers mit den je eine Führungsfase aufweisenden Spiralnuten,
Fig. 2 eine Teil-Längsschnittansicht der ersten Bohrerausführung,
Fig. 3 eine Vorderansicht des Bohrers nach Fig. 1, 2 oder 4,
Fig. 4 eine Teil-Längsschnittansicht einer zweiten Ausführung des Spiralbohrers und
Fig. 5 eine Seitenansicht einer dritten Ausführung des Spiralbohrers.

### Ausführungsbeispiele der Erfindung

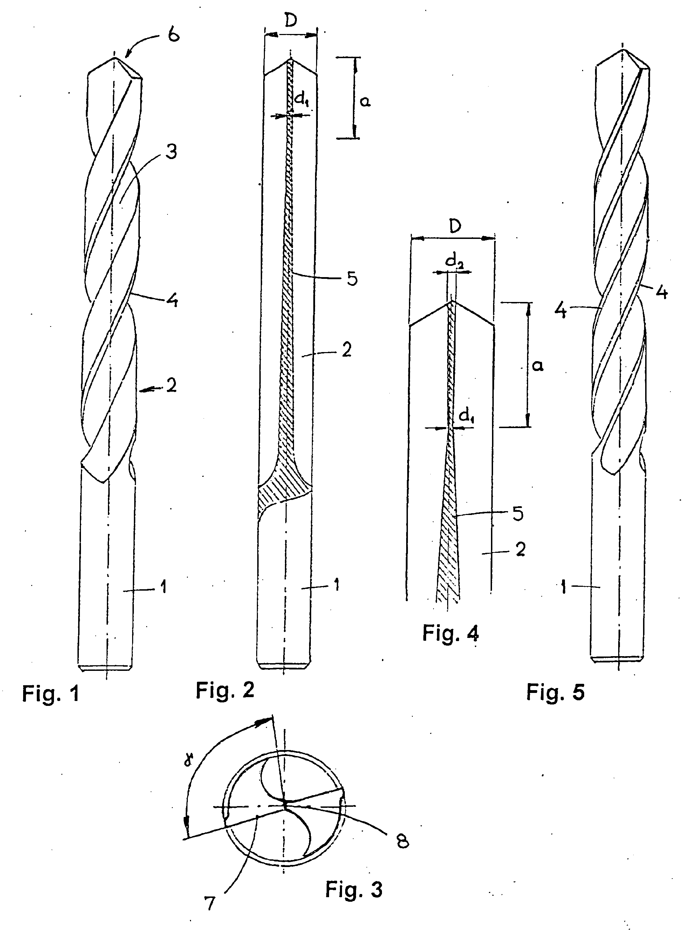

Der spiralförmige geschliffene Metallbohrer nach Fig. 1 bis 3 hat einen Schaft **1**, einen Arbeitsbereich **2**, zwei Spiralnuten **3**, jede mit einer Führungsfase **4**, und einen Kern **5**, der sich in der Längsrichtung von dem Schaft **1** zu der Stirn **6** verjüngt, an dem zwei Haupt- und eine Querschneide **7, 8** geschliffen sind. Der Kern **5** verjüngt sich nur bis zu einem Abstand **a** von der Bohrerspitze, wo der Kern **5** einen Durchmesser **d₁** aufweist, der 8 % des Durchmessers **D** des Arbeitsbereichs **2** beträgt. Im Abschnitt **a** Richtung Spitze ändert sich der Durchmesser **d₁** nicht. Der Kern **5** ist also in diesem Abschnitt **a** zylinderförmig. Der Querschneidenwinkel γ zwischen der Haupt- und Querschneide **7, 8** beträgt 105°.

Im Ausführungsbeispiel nach Fig. 4 verbreitet sich dagegen der Kern **5** im Abschnitt **a** in der Richtung zur Bohrerspitze. Ein Kerndurchmesser **d₂** in der Spitze beträgt 10 % des Durchmessers **D** des Arebitsabschnitts und der Kerndurchmesser **d₁** im Abstand **a** von der Spitze ist um 10 % kleiner als der Kerndurchmesser **d₂.** Der Abstand **a** macht in beiden Ausführungsbeispielen das Zweifache des Durchmessers **D**.

In einer weiteren Ausführung des erfindungsgemäßen Bohrers nach Fig. 5 hat der Kern **5** eine Form, die der Ausführung nach Fig. 4 entspricht. Von den vorhergehenden unterscheidet sich diese Ausführung dadurch, dass die Spiralnuten **3** je zwei Führungsfasen **4** haben.

In jeder der Ausführungen kann der sich verjüngende Kern **5** in mehrere Abschnitte unterteilt sein, deren Konizität abgestuft ist.

Der erfindungsgemäße Bohrer benötigt nur eine geringe Anpresskraft beim Bohren und, besonders in der Ausführung nach Fig. 5, ermöglicht er Bohrungen von großer Güte, sogar am Rande eines Werkstücks oder einer benachbarten Bohrung.

## Patentansprüche

1. Geschliffener spiralförmiger Metallbohrer, der einen Schaft (1) und einen Arbeitsbereich (2) hat, der zwei Spiralnuten (3) mit Führungsfasen (4) und einen Kern (5) aufweist, der sich in der Längsrichtung vom Schaft zur Stirn (6) verjüngt, an der sich zwei Hauptschneiden (7) und eine Querschneide (8) befinden,
**dadurch gekennzeichnet, dass** sich der Kern (5) nur bis zu einem Abstand (a) von der Bohrerspitze verjüngt, in diesem Abstand (a) einen Durchmesser (d₁) aufweist, dessen Größe die Größe eines Kerndurchmessers (d₂) in der Spitze nicht überschreitet, wobei der Kerndurchmesser (d₂) in der Spitze 3 bis 15 % eines Durchmessers (D) des Arbeitsbereichs (2) beträgt und der Querschneidenwinkel (γ) im Bereich von 100 bis 110° liegt.

2. Spiralbohrer nach Anspruch 1, **dadurch gekennzeichnet, dass** sich der Kern (5) vom Ende der Verjüngung bis zur Spitze kegelig verbreitet, wobei der Kerndurchmesser (d₂) in der Spitze um 3 bis 20 % größer als der Kerndurchmesser (d₁) im Abstand (a) ist.

3. Spiralbohrer nach einem der Ansprüche 1 oder 2, **dadurch gekennzeichnet, dass** die Länge des Abschnitts (a) maximal das Vierfache des Durchmessers (D) des Arbeitsbereichs beträgt.

4. Spiralbohrer nach einem der Ansprüche 1 bis 3, **dadurch gekennzeichnet, dass** der Kern (5) von dem Schaft (1) bis zum Ende der Verjüngung in mehrere Abschnitte unterteilt ist, die abgestufte Konizität aufweisen.

5. Spiralbohrer nach einem der Ansprüche 1 bis 4, **dadurch gekennzeichnet, dass** der Bohrer an jeder Spiralnut (3) mit je zwei Führungsfasen (4) versehen ist.
